# EUROPEAN PATENT APPLICATION

(11) **EP 2 739 000 A2**
(43) Date of publication of application: **04.06.2014**
(21) Application number: 13186844.0
(22) Date of filing: 01.10.2013
(51) Int. Cl.: H04L 29/06

(54) **Unified application programming interface for communicating with devices and their clouds**

(30) Priority: 29.11.2012 US 201213689758
(71) Applicant: Ricoh Company, Ltd., Tokyo 143-8555 (JP)
(72) Inventor: Krishna, Vikas, Menlo Park, CA 94025 (US); Bailloeul, Timothee, Menlo Park, CA 94025 (US)
(74) Representative: Maury, Richard Philip

(57) **Abstract**

A system (100) and method for translating requests and responses between different types of devices are described. An enterprise service bus (107) generates a first list of one or more devices, receives a selection from a user associated with a first device of a second device in the first list, generates a second list that includes functions associated with the selection from the first user, receives a request from the first device to perform one of the functions in the second list, translates a first communication protocol of the request received from the first device into a second communication protocol used by the second device to create a translated request, translates a first message format of the request into a second message format and transmits the translated request to the second device.

## Description

### TECHNICAL FIELD

The specification relates to a system and method for translating requests and responses between different types of devices. In particular, the specification relates to an application programming interface for communicating with devices and their clouds.

### BACKGROUND ART

Consumers have a variety of consumer electronic devices to choose from. A problem arises, however, because consumers frequently use devices from different vendors. Each vendor' s device is operated in a certain way, which makes it difficult for the consumers to interact with and adjust to those devices. As a result, the discrepancies delay the cooperation of the devices.

For example, when a business organizes a meeting in a conference room, employees use mobile devices, the room includes a projector for projecting slides and other users connect to the meeting remotely using their laptops. The remote users can employ video conferencing software to view the slides in real-time, however the software frequently malfunctions, the access code for the meeting is not sent to all the participants, etc. In addition, this setup requires a user to come into the room before the event, turn on devices, download presentations to the laptop, etc., which is time consuming and could delay the meeting when the devices experience technical difficulties.

One solution is to develop applications that interface with the application programming interface (API) for each device. Since each vendor' s device has a different API from the rest of the competitors, it is difficult for application developers to adjust to all possible APTs and develop applications efficiently.

In addition, when a cloud is attached to a particular device, only device-centric data can be logged in the cloud. As a result, all user-to-machine interactions are fragmented in the individual clouds. As a result, the content value in each cloud is low as the system cannot get a holistic view of the data and usage pattern that a user may have produced in a collection of disparate devices.

One solution is to purchase a host of products that are all produced by the same corporation. For example, consumers can purchase an iPhone for mobile needs, a Macintosh for a laptop, an Apple Airport for managing the WiEi devices and an AppleTV for watching television. These products, however, are more expensive than other devices and are impractical for businesses.

### DISCLOSURE OF THE INVENTION

The present disclosure overcomes the deficiencies of the prior art with a system for translating requests between different types of devices. In one embodiment, the system includes an enterprise service bus and network appliance as a service (NAaaS) application services. The enterprise service bus instructs the NAaaS application services to identify one or more types of devices in a network, register the one or more types of devices for use in the network by assigning an IP address and a name to each device and add the IP addresses to a list of IP addresses. The enterprise service bus is configured to generate a first list of one or more devices for a first device, receive a selection of a second device in the first list from a user associated with the first device, generate a second list that includes functions associated with the selection from the user, receive a request from the first device to perform one of the functions in the second list, translate a first communication protocol of the request received from the first device into a second communication protocol used by the second device to create a translated request, translate a first message format of the request into a second message format and transmit the translated request to the second device. In another embodiment, the NAaaS application services are further configured to identify a location of a first device in a network and providing the enterprise service bus with the first list of one or more devices within a set distance of the location of the first device.

Other aspects include corresponding methods, systems, apparatuses, and computer program products for these and other innovative aspects.

The system advantageously presents a unified API that simplifies and speeds up the development and maintenance of client applications, and also enables a consistent user experience; and presents a middleware server and its application-related services that log everything in one place. This way, the information is correlated across all devices, even from different vendors, and provides higher value services. In addition, the system creates a single sign-on for accessing all devices in a network. Yet another advantage is that the system makes installation easier for an administrator because the system uses one server for installing updates and interfacing with other servers. The features and advantages described herein are not all-inclusive and many additional features and advantages will be apparent in view of the figures and description. Moreover, it should be noted that the language used in the specification has been principally selected for readability and instructional purposes, and not to limit the scope of the subject matter disclosed herein.

### BRIEF DESCRIPTION OF THE DRAWINGS

The invention is illustrated by way of example, and not by way of limitation in the figures of the accompanying drawings in which like reference numerals are used to refer to similar elements.
Figure 1A is a high-level block diagram illustrating one embodiment of a system for translating requests and responses between different types of devices.
Figure 1B is a high-level block diagram illustrating another embodiment of a system for translating requests and responses between different types of devices.
Figure 2A is a block diagram illustrating one embodiment of an enterprise service bus.
Figure 2B is a block diagram illustrating one embodiment of a Network Appliance as a Service application.
Figures 3A is a graphic representation of an embodiment of a user interface for selecting a media type for viewing on a collaborative computing device.
Figure 3B is a graphic representation of an embodiment of a user interface for selecting a location to send a media for display.
Figure 3C is a graphic representation of an embodiment of a user interface that displays a list of devices at a location or within a set distance of a user device.
Figure 3D is a graphic representation of an embodiment of a user interface that displays a list of commands for operating a selected collaborative computing device from a user device.
Figure 3E is a graphic representation of an embodiment of a user interface that displays a list of options to select a source for displaying a document on a collaborative computing device.
Figure 4 is a flow diagram of one embodiment of a method for managing communication between one or more types of devices.
Figure 5A is a flow diagram of one embodiment of a method for controlling interoperability between different types of devices.
Figure 5B is a flow diagram of another embodiment of a method for controlling interoperation between different types of devices by translating requests.
Figure 6 is a flow diagram of one embodiment of a method for generating a bill based on a cost determined for each transaction performed by a device.

### BEST MODE FOR CARRYING OUT THE INVENTION

A system and method for translating requests and responses between different types of devices are described below. In the following description, for purposes of explanation, numerous specific details are set forth in order to provide a thorough understanding of the invention. It will be apparent, however, to one skilled in the art that the embodiments can be practiced without these specific details. In other instances, structures and devices are shown in block diagram form in order to avoid obscuring the invention. For example, the invention is described in one embodiment below with reference to user devices such as a smart phone and particular software and hardware. However, the description applies to any type of computing device that can receive data and commands, and any peripheral devices providing services.

Reference in the specification to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with non-volatile memory or any type of media suitable for storing electronic instructions, each coupled to a computer system bus.

Some embodiments can take the form of an entirely hardware embodiment, an entirely software embodiment or an embodiment containing both hardware and software elements. A preferred embodiment is implemented in software, which includes but is not limited to firmware, resident software, microcode, etc.

Furthermore, some embodiments can take the form of a computer program product accessible from a computer-usable or computer-readable medium providing program code for use by or in connection with a computer or any instruction execution system. For the purposes of this invention, a computer-usable or computer readable medium can be any apparatus that can contain, store, communicate, propagate, or transport the program for use by or in connection with the instruction execution system, apparatus, or device.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the specification is not described with reference to any particular programming language. It will be appreciated that a variety of programming languages may be used to implement the teachings of the various embodiments as described herein.

### System Overview

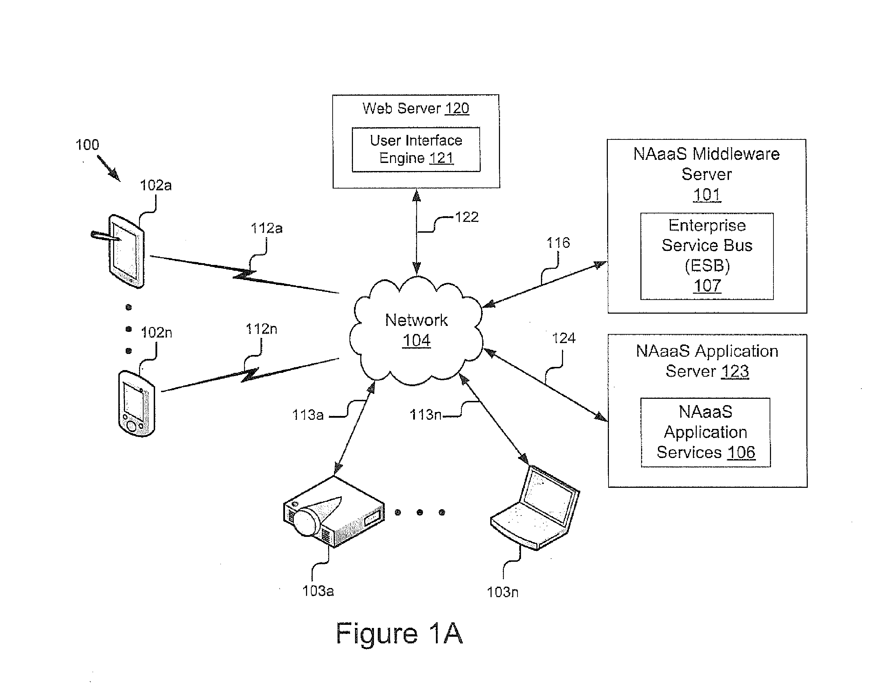

Figure 1A illustrates a high-level block diagram of a system 100 for translating requests and responses between different types of devices. The illustrated embodiment of the system 100 comprises: user devices 102a-102n, collaborative computing devices 103a-103n, a network 104, a web server 120, a Network Appliance As A Service (NAaaS) middleware server 101 and a NAaaS application server 123. In Figure 1A and the remaining figures, a letter after a reference number, for example, "102a" is a reference to the element having that particular reference number. A reference number in the text without a following letter, for example "102," is a general reference to any or all instances of the element bearing that reference number.

The network 104 is a conventional type, wired or wireless, and may have any number of configurations such as a star configuration, token ring configuration or other configurations known to those skilled in the art. Furthermore, the network 104 may comprise a local area network (LAN), a wide area network (WAN) (e.g., the Internet), and/or any other interconnected data path across which multiple devices may communicate. In yet another embodiment, the network 104 may be a peer-to-peer network. The network 104 may also be coupled to or includes portions of a telecommunications network for sending data in a variety of different communication protocols. In yet another embodiment, the network 104 includes Bluetooth communication networks or a cellular communications network for sending and receiving data such as via short messaging service (SMS), multimedia messaging service (MMS), hypertext transfer protocol (HTTP), direct data connection, WAP, email, etc. While only one network 104 is coupled to the plurality of user devices 102a-102n, the plurality of collaborative computing devices 103a-103n, the web server 120, the NAaaS application server 123 and the NAaaS middleware server 101, in practice any number of networks 104 can be connected to the entities.

The user devices 102a-102n are devices associated with a particular user. For example, a company provides its employees with a mobile device or a laptop. The user devices 102a-102n are each coupled to the network 104 via signal lines 112a-112n respectively. The user device 102 is any computing device including a memory, a processor and a communication capability. For example, the user device 102 can be a tablet computer, a personal digital assistant, a smart phone, a feature phone, etc. The user devices 102 can communicate with the network 104 wirelessly or through wired connectivity. The user devices 102 include one or more user applications (not shown) that generate messages to be processed by the enterprise service bus 107.

The user device 102 is adapted for sending and receiving data to and from the NAaaS middleware server 101. For example, the user device 102 sends a command to project an image of a presentation program document on at least one of the plurality of collaborative computing devices 103a-103n to the NAaaS middleware server 101. The user device 102 includes a display for viewing information provided by the enterprise service bus 107. For example, the user device 102 receives graphical data from the NAaaS middleware server 101 for listing the plurality of collaborative computing devices 103a-103n for display on the user device 102.

The user device 102 determines its location so that the user device 102 can interact with other user devices 102 or collaborative computing devices 103 via the NAaaS middleware 101. The user device 102 determines its location information by using global positioning system (GPS) circuitry included within the device itself to determine its location. For determining the user device's 102 location indoors, the user device 102 employs radio frequency, ultra-sound signal or invisible light communication. For example, the user device 102 determines its location through wireless access points based on measuring the intensity of received signals. The user device 102 accesses a database including pairs of media access control (MAC) addresses and locations over the Internet. To determine a location, the user device 102 retrieves the location corresponding to the access point MAC address from the database.

In another embodiment, the user device 102 performs a device discovery process that works via the network 104 using specific protocols like SNMP, ICMP, Bonjour, etc. For example, the user device 102 queries the NAaaS middleware server 101 to discover devices. The NAaaS middleware server 101 uses SNMP or ICMP protocols to discover devices and reports back to the user device 102 with the found devices together with their internet protocol (IP) address, media access control (MAC) addresses, etc.

The collaborative computing devices 103a-103n are devices associated with a particular location and/or a particular function. Collaborative computing devices 103a-103n can be assigned to a conference room or are assigned for meetings. For example, a projector and an interactive whiteboard can be assigned to a select conference room from a plurality of conference rooms inside a building. The collaborative computing devices 103a-103n are each coupled to the network 104 via signal lines 113a-113n respectively. The collaborative computing device 103 is any computing device including a memory and a processor. For example, the collaborative computing device 103 can be a projector, a monitor, a television, an interactive whiteboard, a webcam, a microphone, a loudspeaker, a CD/DVD player, an electronic paper device, an electronic reader, a desktop computer, a tablet, a smartphone, etc.

The collaborative computing device 103 is adapted for sending and receiving data to and from the NAaaS middleware server 101. For example, a projector in a conference room can receive a presentation program document from the NAaaS middleware server 101. In another example, a video conferencing device including a webcam, a microphone and a monitor in a first location can capture a real-time audio-video synchronous communication data stream and send it to another video conferencing device in a second location through the enterprise service bus 107 in the NAaaS middleware server 101.

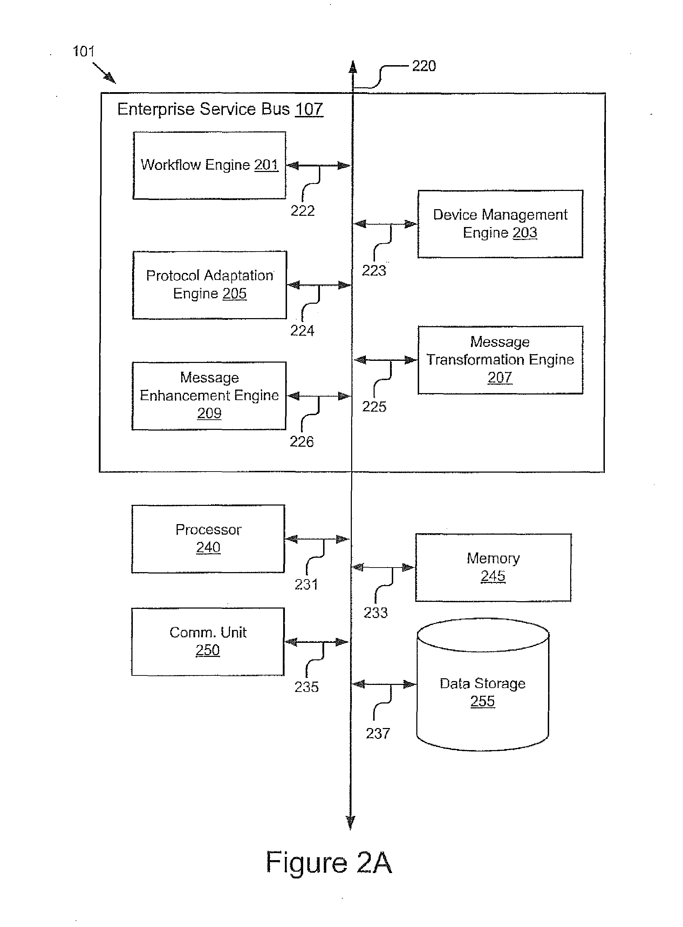

The NAaaS middleware server 101 is any computing device including a memory and a processor which is connected to the network 104 via signal line 116. The NAaaS middleware server 101 comprises an enterprise service bus 107. The enterprise service bus is described in further detail below with reference to Figure 2A.

The enterprise service bus 107 includes code and routines for providing a standard interface to one or more networks of disparate devices and their corresponding server clouds that are deployed independently to communicate with each other. In one embodiment, the enterprise service bus 107 executes one or more services including invocation support, routing (e.g., content based routing, static/deterministic routing, policy based routing, rules based routing) mediation, message queue (e.g., publish-subscribe), process choreography, service orchestration, complex event processing, security and management (e.g., monitoring, logging). The enterprise service bus 107 also calls methods contained in the code on the NAaaS application services 106 that implement the services. For example, the enterprise service bus 107 instructs the NAaaS application services to authenticate users, log device usage entries, store media, analyze media, index keywords related to users' skills and search a database for user profiles that include skills that match a user query.

The user devices 102a-102n or the collaborative computing devices 103a-103n use a particular messaging format over a particular communication protocol to communicate with and send service requests to each other through the enterprise service bus 107. A message format defines the structure and form of the message. For example, message formats include Simple Object Access Protocol (SOAP), eXtensible Markup Language (XML), etc. A communication protocol defines a set of rules governing the syntax, semantics, and synchronization of communications. For example, communication protocols include File Transfer Protocol (FTP), Hypertext Transfer Protocol (HTTP), Message Queue (MQ), Internet Inter-Orb Protocol (HOP), etc. While the enterprise service bus 107 and the NAaaS application services 106 are illustrated as being on separate servers, in one embodiment they are on the same server.

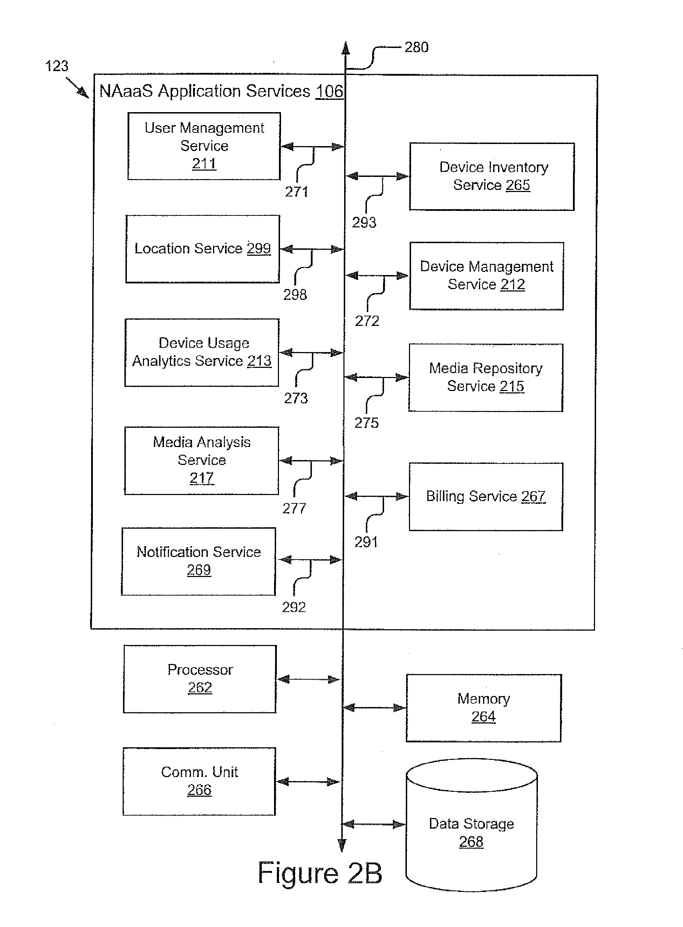

The NAaaS application server 123 is any computing device including a memory and a processor which is connected to the network 104 via signal line 124. The NAaaS application server 123 includes NAaaS application services 106, which is a collection of implementation services that are abstracted as an application and composed by the enterprise service bus 107 in order to deliver higher level services. The NAaaS application services 106 are described in further detail below with reference to Figure 2B.

The web server 120 is any computing device including a memory and a processor that is connected to the network 104 via signal line 122. The web server 120 comprises a user interface engine 121. While the web server 120 is illustrated in Figure 1A as being a separate server, in some embodiments the user interface engine 121 could be stored on a user device 102 or function as a standalone application.

The user interface engine 121 is software and routines for generating graphical data for displaying a user interface. In one embodiment, the user interface engine 121 is a set of instructions executable by the processor to provide the functionality described below for generating graphical data for displaying a user interface. In another embodiment, the user interface engine 121is stored in the memory and is accessible and executable by the processor.

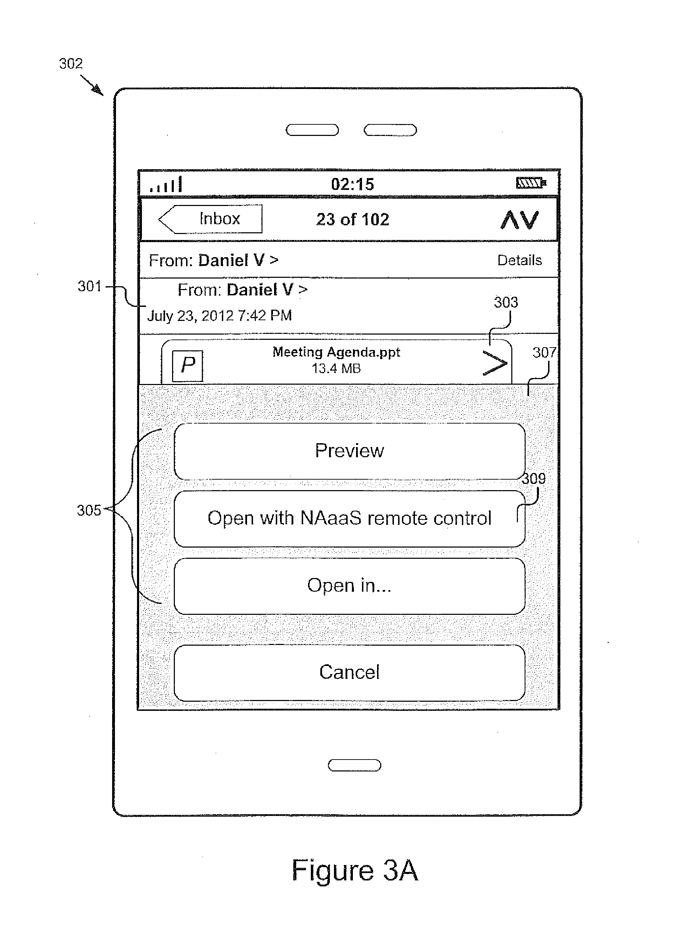

The user interface engine 121 receives a request for generating graphical data for displaying information for controlling collaborative computing devices 103. For example, the user interface engine 121 generates graphical data for displaying a webpage that lists the available collaborative computing devices 103 in a particular location or functions associated with each collaborative computing device 103. The user inputs information and the user interface engine 121 transmits the information to the enterprise service bus 107, which determines the action to be performed. For example, if the user device 102 transmits an instruction for a projector to project an image contained in the request, the user interface engine 121 transmits the request to the enterprise service bus 107, which transmits the request to the projector and instructs the NAaaS application services 106 to perform other actions on the request. Figures 3A-3C includes example user interfaces.

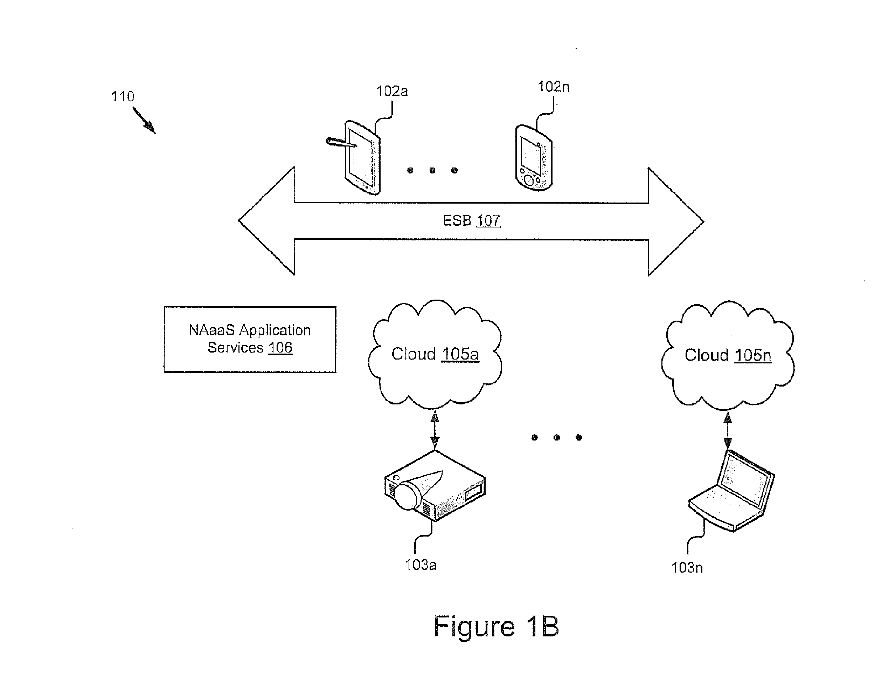

Figure 1B illustrates another high-level block diagram of a system 110 for translating requests and responses between different types of devices according to one embodiment. The illustrated embodiment of the system 110 comprises: user devices 102a-102n as a first layer, the enterprise service bus 107 as a second layer and the NAaaS application services 106, the collaborative computing devices 103a-103n and their corresponding server clouds 105a-105n as a third layer. Each one of the server clouds 105a-105n store a copy of the media type and index the media type associated with the corresponding collaborative computing devices 103a-103n whenever the collaborative computing devices 103a-103n execute a transaction in response to a request. For example, a projector cloud server stores a projected presentation program document, a video conferencing cloud server stores a video recording of the video conference and an interactive whiteboard cloud server stores an image of the interactive whiteboard.

The enterprise service bus 107 layer processes requests coming in from the user devices 102a-102n layer and relays the requests to the NAaaS application services 106 for processing and the collaborative computing devices 103a-103n and their corresponding server clouds 105a-105n. In one embodiment, the enterprise service bus 107 layer comprises one or more ports that provide an interface for user applications on the user devices 102a-102n to connect with the enterprise service layer 107 to send messages and receive responses. In another embodiment, the enterprise service bus 107 layer comprises one or more ports to communicate with the NAaaS application services 106 layer and the collaborative computing devices 103. In one embodiment, a port on the enterprise service bus 107 may be of a particular port type that handles only messages and communications of a particular message format and communication protocol of a user application. In another embodiment, a port on the enterprise service bus 107 may be of a universal port type that includes a generic interface to the enterprise service bus 107 and can handle any messaging format and communication protocol combination.

### Enterprise Service Bus

Referring now to Figure 2A, an example of the enterprise service bus 107 is shown in more detail. Figure 2A is a block diagram of a server 101 that includes: a processor 240, a memory 245, a communication unit 250 and the enterprise service bus 107.

The processor 240, the memory 245, the communication unit 250 and the enterprise service bus 107 are communicatively coupled to the bus 220. The bus 220 may represent one or more buses including an industry standard architecture (ISA) bus, a peripheral component interconnect (PCI) bus, a universal serial bus (USB), or some other bus known in the art to provide similar functionality.

The processor 240 comprises an arithmetic logic unit, a microprocessor, a general purpose controller or some other processor array to perform computations and provide electronic display signals to a display device. The processor 240 is coupled to the bus 220 for communication with the other components of the server 101 via signal line 231. The processor 240 processes data signals and may comprise various computing architectures including a complex instruction set computer (CISC) architecture, a reduced instruction set computer (RISC) architecture, or an architecture implementing a combination of instruction sets. Although only a single processor is shown in Figure 2A, multiple processors may be included. The processing capability may be limited to supporting the display of images and the capture and transmission of images. The processing capability might be enough to perform more complex tasks, including various types of feature extraction and sampling. It will be obvious to one skilled in the art that other processors, operating systems, sensors, displays and physical configurations are possible.

The memory 245 stores instructions and/or data that may be executed by processor 240. The memory 245 is coupled to the bus 220 for communication with the other components of the NAaaS middleware server 101 via signal line 233. The instructions and/or data may comprise code for performing any and/or all of the techniques described herein. The memory 245 may be a dynamic random access memory (DRAM) device, a static random access memory (SRAM) device, flash memory or some other memory device known in the art. In one embodiment, the memory 245 also includes a non-volatile memory or similar permanent storage device and media such as a hard disk drive, a floppy disk drive, a CD-ROM device, a DVD-ROM device, a DVD-RAM device, a DVD-RW device, a flash memory device, or some other mass storage device known in the art for storing information on a more permanent basis.

The communication unit 250 is hardware for receiving and transmitting data by linking the processor 240 to the network 104 and other processing systems. The communication unit 250 receives data such as images from a plurality of user devices 102a-102n. The communication unit 250 also receives requests for user profiles associated with a skill from the web server 120. The communication unit 250 transmits information to the plurality of collaborative computing devices 103a-103n. For example, the communication unit 250 transmits graphical data for displaying images or videos. The communication unit 250 is coupled to the bus 220 for communication with the other components of the NAaaS middleware server 101 via signal line 235.

In one embodiment, the communication unit 250 includes a port for direct physical connection to the user devices 102, the collaborative computing devices 103, the NAaaS application server 123, the web server 120 or to another communication channel. For example, the communication unit 250 includes an RJ14 or similar port for wired communication with the enterprise service bus 107. In another embodiment, the communication unit 250 includes a wireless transceiver for exchanging data with the user devices 102 or any other communication channel using one or more wireless communication methods, such as IEEE 802.11, IEEE 802.16, Bluetooth® or another suitable wireless communication method.

In yet another embodiment, the communication unit 250 includes a cellular communications transceiver for sending and receiving data over a cellular communications network such as via short messaging service (SMS), multimedia messaging service (MMS), hypertext transfer protocol (HTTP), direct data connection, WAP, e-mail or another suitable type of electronic communication. In still another embodiment, the communication unit 250 includes a wired port and a wireless transceiver. The communication unit 250 also provides other conventional connections to the network for distribution of files and/or media objects using standard network protocols such as TCP/IP, FTP, HTTP, HTTPS and SMTP as will be understood to those skilled in the art.

The data storage 255 is a non-transitory memory that stores data for the functionality of the server 101. The data storage 255 is coupled to the bus 220 for communication with other components of the server 101 via signal line 237.

In one embodiment, the data storage 255 stores a library of communication protocols and messaging formats for protocol conversion. The communication protocols and messaging formats that the data storage 255 stores include, for example, Simple Object Access Protocol (SOAP), eXtensible Markup Language (XML), Java Message Service (JMS), File Transfer Protocol (FTP), Hypertext Transfer Protocol (HTTP), Message Queue (MQ), Internet Inter-Orb Protocol (HOP), Representational State Transfer (REST), JavaScript Object Notation (JSON), Distributed Component Object Model (DCOM), etc. In some embodiments, the protocol adaptation engine 205 accesses the protocols and messaging formats to convert requests into a protocol and messaging format that is compatible with the recipient.

The enterprise service bus 107 includes: a workflow engine 201, a device management engine 203, a protocol adaptation engine 205, a message transformation engine 207 and a message enhancement engine 209. These components of the enterprise service bus 107 are communicatively coupled to each other via the bus 220.

The workflow engine 201 is software and routines for performing basic enterprise service bus functionalities and for handling communications between the components of the NAaaS middleware server 101 and other components of the system 100. In one embodiment, the workflow engine 201 is a set of instructions executable by the processor 240 to provide the functionality described below for receiving a request, performing several steps and interacting with the NAaaS application services 106 and the collaborative computing devices 103 to satisfy the request. In either embodiment, the workflow engine 201 is adapted for cooperation and communication with the processor 240, the communication unit 250 and other components of the NAaaS middleware server 101 via the signal line 222.

The workflow engine 201 receives a request, processes the request and communicates with the NAaaS application services 106 and the collaborative computing devices 103 to complete the request. For example, the workflow engine 201 receives a request from a user device 102 for one of the collaborative computing devices 103 to project an image. The workflow engine 201 authenticates the user associated with the user device 102 by interacting with the user management service 211 that is part of the NAaaS application services 106, instructing the device usage analytics service 213 to log the command, a user identifier for the user associated with the user device 102, the date and time of the request and the IP address of the user device 102, copying the image that the user sent to the repository by interacting with the media repository services 215, performing optical character recognition of the image and indexing keywords in the image by interacting with the media analysis service 217 and transmits the image to the collaborative computing device 103 for projection.

The workflow engine 201 receives information via the communication unit 250 and transmits the information to the appropriate component of the enterprise service bus 107 or components of the system 100. In one embodiment, the workflow engine 201 receives a request to transmit media to a collaborative computing device 103. The workflow engine 201 can receive one or more types of media. The workflow engine 201 routes or transmits the media to the collaborative computing device 103. For example, the workflow engine 201 receives an image from a user device 102 (e.g., a smart phone) for display by a collaborative computing device 103 (e.g., a projector or a monitor).

The device management engine 203 is code and routines for determining a location of the one or more types of devices, functionality associated with the one or more types of devices and a status of the one or more types of devices. In one embodiment, the device management engine 203 is a set of instructions executable by the processor 240 to provide the functionality described below for determining location, functionality and status associated with the one or more types of devices. In another embodiment, the device management engine 203 is stored in the memory 245 and is accessible and executable by the processor 240. In either embodiment, the device management engine 203 is adapted for cooperation and communication with the processor 240, the communication unit 250, the workflow engine 201 and other components of the server 101 via signal line 223.

In one embodiment, the device management engine 203 communicates with the NAaaS application services 106 to determine the location of the one or more types of devices. For example, the device management engine 203 receives a query from the user device 102 to discover the location of the user device 102 and discover the collaborative computing devices 105. The device management engine 203 interacts with the location service 299 that is part of the NAaaS application services 106 to match the location of the user device 102 with a known location. In some embodiments, the device management engine 203 transmits the location of the user device 102 to the user device 102.

In one embodiment, the device management engine 203 performs a device discovery process that works via the network 104 using specific protocols like SNMP, ICMP, Bonjour, etc. For example, the device management engine 203 uses SNMP or ICMP protocols to discover devices together with their internet protocol (IP) address, media access control (MAC) addresses, etc. In another embodiment, the device management engine 203 determines location information of a device by using global positioning system (GPS) circuitry included within the device itself. In another embodiment, the device management engine 203 determines the device location indoors as the device employs radio frequency, ultra-sound signal or invisible light communication. For example, the device determines its location through wireless access points based on measuring the intensity of received signals. The device management engine 203 accesses a database including pairs of media access control (MAC) addresses and locations over the Internet. To determine a location, the device management engine 203 retrieves the location corresponding to the access point MAC address from the database.

In one embodiment, once the device management engine 203 receives the user device 102 location from the location service 299, the device management engine 203 asks a device inventory service 265 that is part of the NAaaS application services 106 to provide a list of devices given a certain location. The device management engine 203 then requests that a device management service 212 that is also part of the NAaaS application services 106 filter the list of devices based on the availability of the devices.

In one embodiment, the request from the user device 102 specifies a location associated with the collaborative computing devices 105. For example, a user wants to know about devices in a conference room in Japan because the user is scheduled to give a presentation to people who will be in that conference room. In one embodiment, the location service 299 matches the location associated with a request to a known location from the data storage 268 of NAaaS application services 106. A location identifier is sent to the device management engine 203 by the location service 299. In another embodiment, the device inventory service 265 provides a list of all devices on the network 104 to the device management engine 203 responsive to the device management engine 203 using the location identifier of the user device 102 for querying. In yet another embodiment, the device management engine 203 queries the device management service 212 to limit the list of available devices to a particular area and the device management service 212 transmits the information back to the device management engine 203. For example, the user can request to receive a list of available devices in a conference room inside a building.

In one embodiment, the device management engine 203 determines a list of functions associated with each of the plurality of devices. For example, the list of functions include power on, power off, projection, zoom, enhance, automatic focus, print, two-way video recording and transmission, two-way audio recording and transmission, language translation, text to speech translation and speech to text translation, etc.

In one embodiment, the device management engine 203 determines a current status of one or more devices. For example, a status of a projector in a conference room can be determined to be in use, out of service, idle, off, etc. In another embodiment, the device management engine 203 determines that one or more devices reserved by a user are idle for a set amount of time. In one embodiment, the device management engine 203 interacts with the device management service 212 that is part of the NAaaS application services 106 to update the status of a device.

The protocol adaptation engine 205 is software and routines for adapting and translating protocols. In one embodiment, the protocol adaptation engine 205 is a set of instructions executable by the processor 240 to provide the functionality described below for adapting and translating protocols. In either embodiment, the protocol adaptation engine 205 is adapted for cooperation and communication with the processor 240, the communication unit 250 and other components of the NAaaS middleware server 101 via the signal line 224.

In one embodiment, the protocol adaptation engine 205 receives a request from the workflow engine 201 in a first communication protocol and performs adaptation and translation to make the communication protocol compatible with the recipient of the request. For example, the protocol adaptation engine 205 receives an HTTP request from the user device 102 to "turn off" a projector. The projector communicates using TCP. The protocol adaptation engine 205 adapts an HTTP request to be forwarded to a TCP endpoint and transforms the "turn off" HTTP request to "switch off," which is a TCP command.

The message transformation engine 207 is software and routines for translating messages. In one embodiment, the message transformation engine 207 is a set of instructions executable by the processor 240 to provide the functionality described below for translating messages. In either embodiment, the message transformation engine 207 is adapted for cooperation and communication with the processor 240, the communication unit 250 and other components of the NAaaS middleware server 101 via the signal line 225. For example, the message transformation engine 207 transforms the payload from an eXtensible Markup Language (XML) to JavaScript Object Notation (JSON).

Continuing with the above example, the request includes a JSON message that is passed to the message transformation engine 207 and the message enhancement engine 209:

```
      "naaasprotocol": "1.0",
      "device":
             {
                  "category:" "PJS",
                  "type": "SOLEIL",
                  "url": "10.154.25.9"
             }
      "ricohuserid_opt": "3"
      }
```

Where "naaasprotocol" is the Web API version of the platform, "PJS" designates the projector devices, "SOLEIL" is a type of projector, "url" is the device IP address for the projector and "ricohuserid_opt" is the ID of the user operating the device. In one embodiment, the message transformation engine 207 translates the JSON message into XML.

The message enhancement engine 209 is software and routines for enhancing messages. In one embodiment, the message enhancement engine 209 is a set of instructions executable by the processor 240 to provide the functionality described below for enhancing messages. In either embodiment, the message enhancement engine 209 is adapted for cooperation and communication with the processor 240, the communication unit 250 and other components of the NAaaS middleware server 101 via the signal line 226.

The message enhancement engine 209 can also enhance the message by adding information not originally present in the request for interacting with a collaborative computing device 103. For example, continuing with the example above, where the user wants to project an image onto a projector that requires additional authentication information, the message enhancement engine 209 retrieves the additional authentication information, such as a password, from the data storage 255 using a user identifier in the request and adds it to the message. Once the message is ready, the message enhancement engine 209 transmits the message to the workflow engine 201 in the enterprise service bus 107, which transmits the message to the projector.

### NAaaS Application Services

Figure 2B illustrates one embodiment of a NAaaS application server 123 that comprises NAaaS application services 106, a processor 262, a memory 264, a communication unit 266 and data storage 268. Some of the components of the NAaaS application server 123 have similar function and form as has been described above with reference to Figure 2A so like reference numbers and terminology have been used to indicate similar functionality. For example, the communication bus 280, the processor 262, the memory 264 and the communication unit 266 are similar to that described above with reference to Figure 2A so they will not be described here again.

In one embodiment, the data storage 268 device usage entries, an index of the media, the media and user profiles. The device usage entry describes transactions executed on the collaborative computing devices 103 and user identifiers associated with the transaction. In some embodiments, the device usage entry includes multiple user identifiers. For example, the device usage entry includes a user identifier for the presenter, e.g. a first user that sends a request from a user device 102 to project an image from a collaborative computing device 103 and a user identifier for the author of the media The device usage entry includes the type of request (e.g., project, power on, power off, etc.), the type of device involved in the exchange of request and service (e.g., smart phone, projector, etc.), an IP address for the device, a measure of device resource spent (e.g., time, power, etc.), a type of functionality of the device used (e.g., auto-focus, enhance, imaging, etc.), a type of media exchanged (e.g., a presentation program document, a text document, a spreadsheet document, a video recording, an audio recording, an image, etc.), etc.

The data storage 268 stores an index of media. In one embodiment, the index of media includes records for each media including metadata for each media. For example, the metadata may include pointer data for accessing the original media (e.g. a full presentation instead of merely an image of a slide of the presentation) from the cloud, an author of the media, etc. In one embodiment, the metadata also includes results from the media analysis service 217, such as a text version of the image. In one embodiment, the data storage 268 also stores a copy of the media included in the requests. For example, the data storage 268 receives a copy of the media from the media repository services 215.

The data storage 268 stores user profiles. In one embodiment, the user profiles include records for each user. The records for each user may include a graphical representation of the user (e.g. a photo of the user), name, a title, keywords related to the user, media associated with the user (e.g., media authored by the user or media presented by the user), presentations associated with the user, etc. In one embodiment, the keywords related to the user include a list of keywords.

The NAaaS application services 106 is a collection of individual lower-level services with individual application programming interfaces (APIs) that are composed by the enterprise service bus 107 to deliver higher services. For example, a "proj ect" command sent by a user device 102 to the enterprise service bus 107 will invoke a module in the NAaaS application services 106 that will authenticate the user device 102, identify text in the media and save the document in the data storage 268. The services do not communicate with each other. Instead the services receive instructions from the enterprise service bus 107, complete the requested task, save data in the data storage 268 if applicable and return information to the enterprise service bus 107.

In one embodiment the services include a user management service 211, a device usage analytics service 213, a media repository service 215, a media analysis service 217, a device management service 212, a location service 299, a device discovery service 265, a billing service 267 and a notification service 269. Persons of ordinary skill in the art will recognize that the enterprise service bus 107 can compose additional services to complete requests.

The user management service 211 is code and routines for registering users in the network 104 and performing authentication of users. In one embodiment, the user management service 211 is a set of instructions executable by the processor 262 to provide the functionality described below for registering users. In another embodiment, the registration module 203 is stored in the memory 264 and is accessible and executable by the processor 262. In either embodiment, the user management service 211 is adapted for cooperation and communication with the processor 262 and the communication unit 266 via signal line 271.

The user management service 211 receives user information and generates a user profile. For example, the user management service 211 receives a name, a job title, a job code, an e-mail address, a phone number, a username, a password, a retina scan of the user, a fingerprint swipe of the user, etc. The user management service 211 generates login credentials for the user based on the registration information and stores the login credentials in the data storage 268 for the user. The user management service 211 associates a unique identifier with the user. This can be the user's full name, an email address for the user, a series of numbers, an employee identifier, etc. The unique identifier is used to track the user's activities in the system.

In one embodiment, the login credentials are generated as a single sign-on with a property that provides access control to multiple and independent devices and services using the same login credentials. For example, a user logs in with the user credentials and gains access to all registered services without being prompted to login at each one of them. In another example, a user logs into different types of devices such as a projector, an interactive whiteboard, etc. using the same user credentials. In one embodiment, the user management service 211 stores the login credentials of users as an organized set of records with a hierarchical structure in a Lightweight Directory Access Protocol (LDAP) server (not shown) associated with a business. The user management service 211 also manages preferences for the user that are received during registration or at other times. For example, the user can upload an image to associate with the login credentials.

In some embodiments where the user devices 102 and/or collaborative computing devices 103 use different login information than the login information used to authenticate the user with the system 100, the user management service 211 receives the login information from the user or an administrator and adds the information to the user's profile. For example, a user's laptop includes a four-digit code that needs to be input before the user can access the contents of the laptop. The user management service 211 adds the information to the user's profile.

The user management service 211 performs authentication. For example, a user enters login credentials into a user interface on the user device 102. The user device 102 transmits the login credentials to the enterprise service bus 107, which requests that the user management service 211 authenticate the user based on the login credentials. The user management service 211 identifies the user associated with the user device 102, compares the login credentials to the user profile and either sends a confirmation back to the enterprise service bus 107 that the login credentials were correct or a notification that there was a login error. The confirmation includes the user identification associated with the user.

In one embodiment, if the login request for authentication does not include a correct user name and password, the login request is denied. In another embodiment, the user management service 211 is used in account recovery when the user has forgotten his, or her, username and/or password. In some instances, the user management service 211 detects a potentially fraudulent authentication by analyzing the secondary information included in the login request. For example, if the username associated with the login request is a username of a user no longer employed at a company, or a suspected bot, the user management service 211 identifies the login request as potentially fraudulent. The user management service 211 detects a potentially fraudulent authentication by comparing the secondary information to historical authentication information of the user. For example, if the login request for authentication originates from a country, or device, that the user has not attempted to send login requests from before (e.g., unregistered device), the user management service 211 identifies the login request as potentially fraudulent. In one embodiment, a potentially fraudulent authentication attempt includes a failed authentication attempt.

The device inventory service 265 is code and routines for registering devices in the network 104. In one embodiment, the device inventory service 265 is a set of instructions executable by the processor 262 to provide the functionality described below for registering devices. In another embodiment, the device inventory service 265 is stored in the memory 264 and is accessible and executable by the processor 262. In either embodiment, the device inventory service 265 is adapted for cooperation and communication with the processor 262 and the communication unit 266 via signal line 293.

The device inventory service 265 receives requests to add, remove and update devices in the network 104 from the workflow engine 201. The device inventory service 265 receives a request to register one or more types of user devices 102a-102n and one or more types of collaborative computing devices 103a-103n. In one embodiment, the device inventory service 265 registers the type of device and an IP address (or MAC address) for the device with the network 104 and creates a device identifier specific for the device. For example, a new projector with model number 1042 is registered and assigned a device identifier, such as, "prj1042u1". In one embodiment, the device inventory service 265 receives a request to register one or more types of user devices 102a-102n under a particular username stored in the data storage 268. For example, a user can register personal devices such as a tablet PC, a smartphone, etc. and associate the devices with a form of identification, such as an employee identifier, user identifier, etc. In one embodiment, the device inventory service 265 maps the location with the device by importing the location identifier provided by the Location Service 299. In another embodiment, the device inventory service 265 receives a request to register the one or more types of collaborative computing devices 103a-103n for use at a particular location or within certain limits of space. For example, a projector can be registered for use on the first floor of a building and an interactive whiteboard can be registered for use in a conference room. The first floor of the building and the conference room each has a location identifier associated with them. The device inventory service 265 stores the device registration information (e.g., IP addresses, device identifiers, etc.) in the data storage 268.

In another embodiment, the device inventory service 265 identifies devices associated with a location using a location identifier generated by the location service 299. The location identifier is received from the device management engine 203 for storing in the data storage 268. For example, a projector can be registered to a conference room in a building in Tokyo, Japan and the conference room has a location identifier. A user can access the projector from San Francisco, California using the login credentials indicating the user is a registered user. In yet another embodiment, the device inventory service 265 receives requests to update information associated with the devices that are registered. For example, a user can change the name of a projector, the location of an interactive whiteboard and the firmware version on the video conferencing device, etc.

The location service 299 is code and routines for providing and storing location information of one or more types of devices. In one embodiment, the location service 299 is a set of instructions executable by the processor 262 to provide the functionality described below for storing device location information. In another embodiment, the location service 299 is stored in the memory 264 and is accessible and executable by the processor 262. In either embodiment, the location service 299 is adapted for cooperation and communication with the processor 262 and the communication unit 266 via signal line 298.

In one embodiment, the device management engine 203 from the enterprise service bus 107 interacts with the location service 299 to store location information including name, geographical coordinates, etc. In another embodiment, the location service 299 receives a request to register a location before devices can be registered or assigned to the location. For example, a user may register the location of a new branch in Singapore before another user from Menlo Park, California can send media to the devices that are registered at the Singapore location.

The device management service 212 is code and routines for reserving devices in the network 104 and granting access to the devices. In one embodiment, the device management service 212 is a set of instructions executable by the processor 262 to provide the functionality described below for reserving devices. In another embodiment, the device management service 212 is stored in the memory 264 and is accessible and executable by the processor 262. In either embodiment, the device management service 212 is adapted for cooperation and communication with the processor 262 and the communication unit 266 via signal line 272.

In one embodiment, the device management service 212 receives a request to reserve one or more types of collaborative computing devices 103a-103n that are shared with a group of people, for example, employees in a company. For example, a user employee can reserve a projector, an interactive whiteboard, etc. temporarily under his username or user identifier for use in a business meeting. In another example, the user employee can supply a device identifier along with the user identifier for reserving devices. The device management service 212 grants an access request for a user of the group to the one or more types of collaborative computing devices 103a-103n that are registered previously using the user' s login credentials created by the user management service 211. For example, the user accesses collaborative computing devices 103a-103n such as a projector, a webcam, an interactive whiteboard, etc. using one and the same username and password.

The device usage analytics service 213 is code and routines for logging device usage entries associated with the requests in the network 104. In one embodiment, the device usage analytics service 213 is a set of instructions executable by the processor 262 to provide the functionality described below for logging device usage entries. In another embodiment, the device usage analytics service 213 is stored in the memory 264 and is accessible and executable by the processor 262. In either embodiment, the device usage analytics service 213 is adapted for cooperation and communication with the processor 262 and the communication unit 266 via signal line 273.

The device usage analytics service 213 receives a request and a user identifier associated with the request and logs the metadata associated with the request as a device usage entry. If the user associated with request is different from the author of the media, the device usage entry includes a user identifier for both the presenter and the author of the media. For example, a doctor gives a talk about a medical subject to residents at a hospital by using slides that are transmitted from the professor's user device 102 (e.g. a laptop) to a collaborative computing device 103 (e.g. a projector). Each time the doctor wants to display a slide on the projector, the doctor sends a request to display an image of the slide from the laptop to the projector. The enterprise service bus 107 transmits the request to the user management service 211, which identifies the user associated with the user device 102. The enterprise service bus 107 receives a confirmation of authentication from the user management service 211 and an identity of the user and transmits the request and user identifier to the device usage analytics service 213, which logs a device usage entry. In one embodiment, the device usage entry includes a user identifier for the user associated with the user device 102, an author of the media (if different), a set of actions performed on the collaborative computing device 103, a unique device identifier of the collaborative computing device 103 and a unique identifier referring to the stored media in the data storage 268.

The media repository service 215 is code and routines for storing media associated with a request in data storage 268. In one embodiment, the media repository service 215 is a set of instructions executable by the processor 262 to provide the functionality described below for storing media. In another embodiment, the media repository service 215 is stored in the memory 264 and is accessible and executable by the processor 262. In either embodiment, the media repository service 215 is adapted for cooperation and communication with the processor 262 and the communication unit 266 via signal line 275.

The media repository service 215 receives a request from the enterprise service bus 107 that includes media. The media repository service 215 generates a unique identifier associated with the media and stores the media in the data storage 268.

The media analysis service 217 is code and routines for analyzing media. In one embodiment, the media analysis service 217 is a set of instructions executable by the processor 262 to provide the functionality described below for analyzing media. In another embodiment, the media analysis service 217 is stored in the memory 264 and is accessible and executable by the processor 262. In either embodiment, the media analysis service 217 is adapted for cooperation and communication with the processor 262 and the communication unit 266 via signal line 277.

The media analysis service 217 receives media associated with a request from the enterprise service bus 107. For example, the media analysis service 217 receives an image that was captured from a slide. The media analysis service 217 applies optical character recognition to the image to identify text associated with the image. The media analysis service 217 stores the text in the data storage 268. In one embodiment, the media analysis service 217 converts content from the image including handwritten, typewritten or printed text to machine-encoded text.

In one embodiment, the media analysis service 217 receives video and/or audio data. The media analysis service 217 may identify a user associated with the video and/or audio data received from a video conferencing device. For example, a video may include the doctor from the example above giving the presentation in front of an interactive whiteboard. The media analysis service 217 may identify the doctor based on performing facial recognition on the video data or performing voice analysis on the audio data. In another embodiment, the media can be provided by audience members that participate in an event. The media analysis service 217 determines an event. For example, the media analysis service 217 determines a presentation. The media analysis service 217 determines audience members at an event. In some embodiments, the media analysis service 217 determines audience member attendance based on location of a user device 102. The media analysis service 217 determines which audience members participated in the event. In one embodiment, the media analysis service 217 determines which audience members participated in an event based on performing facial recognition from video data or performing voice analysis on the audio data.

In one embodiment, the media analysis service 217 receives video data of an event or a presentation from the enterprise service bus 107. For example, the video includes a person in front of an interactive whiteboard for presenting information. The media analysis service 217 may perform optical character recognition on one or more frames of the video. For example, the media analysis service 217 performs optical character recognition on the information presented on the interactive whiteboard. In another embodiment, the media analysis service 217 receives audio data. The media analysis service 217 may identify text from the audio data by using speech-to-text technology.

The billing service 267 is code and routines for generating a bill for a user. In one embodiment, the billing service 267 is a set of instructions executable by the processor 262 to provide the functionality described below for generating and storing billing information. In another embodiment, the billing service 267 is stored in the memory 264 and is accessible and executable by the processor 262. In either embodiment, the billing service 267 is adapted for cooperation and communication with the processor 262 and the communication unit 266 via signal line 291.

The device usage data is stored by the device usage analytics engine 213 in the data storage 268. The workflow engine 201 retrieves the data associated with device usage from the device usage analytics engine 213 and provides the data to the billing service 267. In one embodiment, the billing service 267 determines a cost associated with the device usage of a single device. For example, the billing service 267 determines that the cost of using a Magnetic Resonance Imaging (MRI) device to image the spine of a patient is 2000 dollars. The billing service 267 then generates a bill based on the cost associated with the device usage and sends the bill to the workflow engine 201 or stores the bill in the data storage 268. In another embodiment, the billing service 267 determines a cost associated with a user device 102 accessing a plurality of collaborative computing devices 103. For example, the billing service 267 generates a bill for the user device 102 accessing a printer, a projector, conferencing services, etc. for the month of November.

The notification service 269 is code and routines for generating notifications in the network 104. In one embodiment, the notification service 269 is a set of instructions executable by the processor 262 to provide the functionality described below for generating and issuing notifications. In another embodiment, the notification service 269 is stored in the memory 264 and is accessible and executable by the processor 262. In either embodiment, the notification service 269 is adapted for cooperation and communication with the processor 262 and the communication unit 266 via signal line 292.

In one embodiment, the notification service 269 receives the bill from the workflow engine 201 or retrieves the bill from data storage 268 and generates a notification indicating that the bill is ready. The notification is sent to the workflow engine 201, which transmits the notification to the user device 102 or an email account of a user using the user device 102. In another embodiment, the notification service 269 generates a notification indicating when to replace one or more types of devices based on the device usage. For example, the notification service 269 determines that a projector is nearing its lifetime based on the number of hours the projector has been used and generates a notification to send to the service personnel. In yet another embodiment, the notification service 269 receives a list of devices from the workflow engine 201 that are idle for a set amount of time and generates a notification indicating the list of devices which are idle and providing an option to power off the devices in the list. For example, an employer leaving a parking lot after attending a group meeting inside a building can be notified by the workflow engine 201 that a projector, an interactive whiteboard, a web camera, etc. in the conference room are idle. The user can send a request to power off all the devices responsive to receiving the notification from the workflow engine 201.

### Example User Interfaces

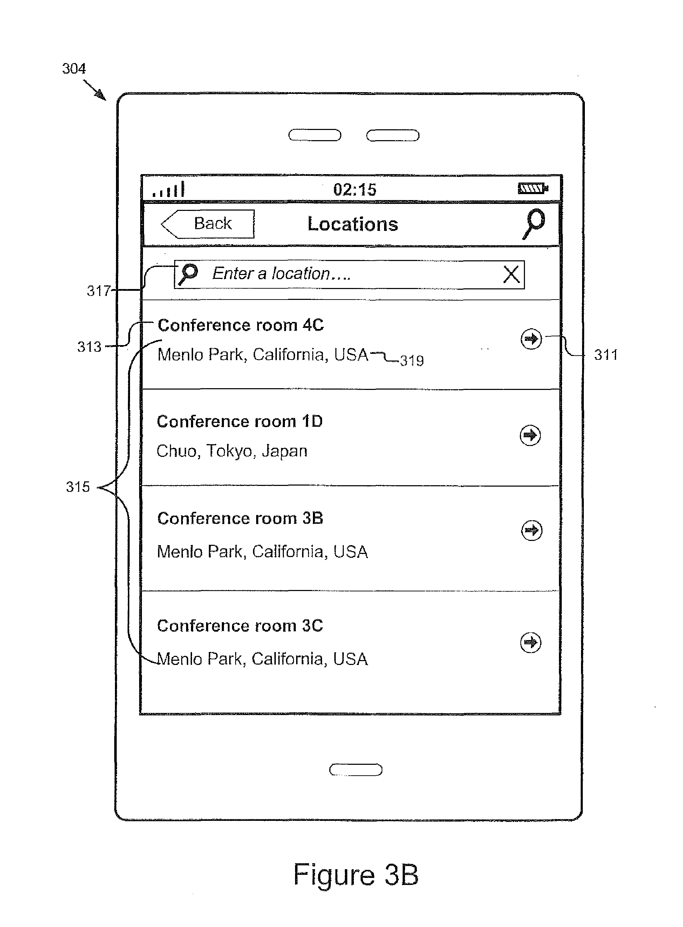

Turning now to Figure 3A, a graphic representation of an embodiment of a user interface 302 for selecting a media type for viewing on a collaborative computing device such as a projector device. The user interface 302 displays a message 301 in an inbox on a smartphone of a user. The message 302 includes an attachment 303. When the user selects the attachment 303, an overlay 307 pop ups proposing a list 305 of options on how to open the attachment 303 including preview, open with NAaaS remote control, open in or cancel. Upon selecting "Open with NAaaS remote control" option 309 the user is directed to another user interface for selecting a location where at the attachment 303 should be displayed and is explained in further detail with reference to Figure 3B.

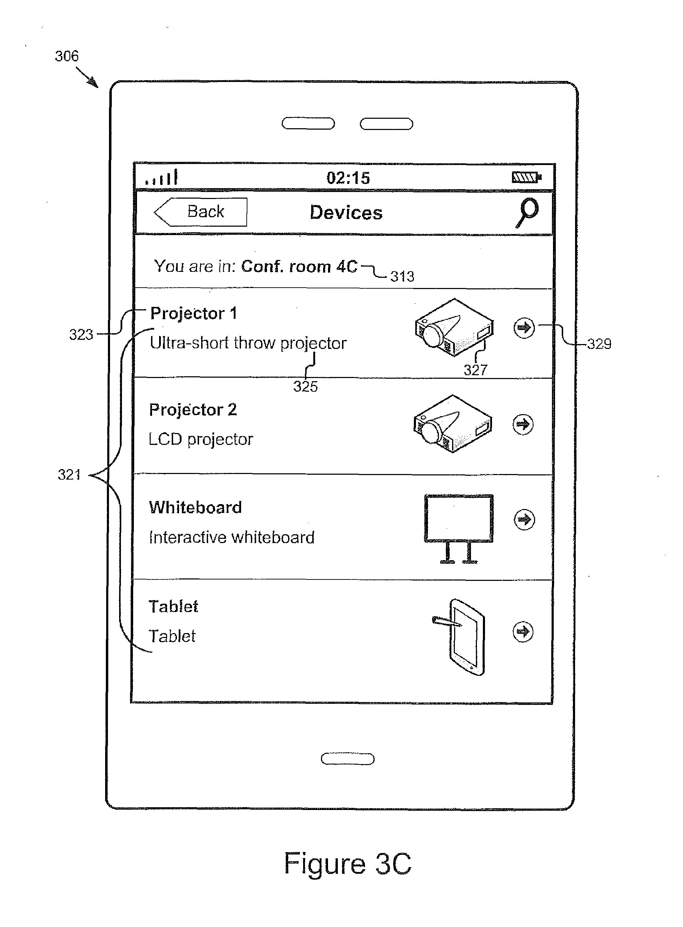

Figure 3B is a graphic representation of an embodiment of a user interface 304 for selecting a location to send a media for display. Figure 3B could be the next screen that a user sees after selecting the "Open in..." option from the list 305 of options in Figure 3A or it could be related to a different step, for example, a situation where the user wants to see devices associated with a particular location. The user interface 304 includes a search box 317 for entering a location to search. The user interface 304 includes a list 315 of locations which the user can select to send the media for display. Each item in the list 315 includes a name 313 of the location and an address 319 of the location. Upon selecting the button 311 for "Conference room 4C" the user is directed to another user interface that displays a list of devices and is explained in further detail with reference to Figure 3C.

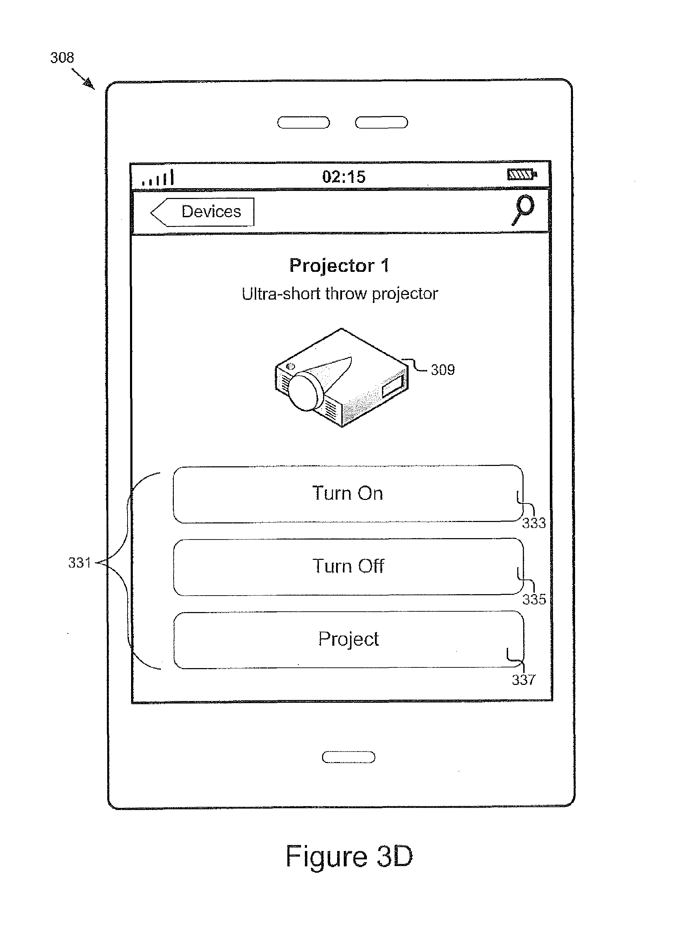

Figure 3C is a graphic representation of an embodiment of a user interface 306 for displaying a list of devices at a location or within a set distance of a user device 102 such as a smartphone. The user interface 306 displays a list 321 of devices detected at a location 313 named "Conf. room 4C". The list 321 of devices includes one or more collaborative computing devices 103. Each item of the list 303 includes a device name 323, a short description 325 of the device and a thumbnail representation 327 of the device. Upon selecting the button 329 for "Projector 1" the user is directed to another user interface for sending a command to the selected device "Projector 1" which is explained in further detail with reference to Figure 3D.

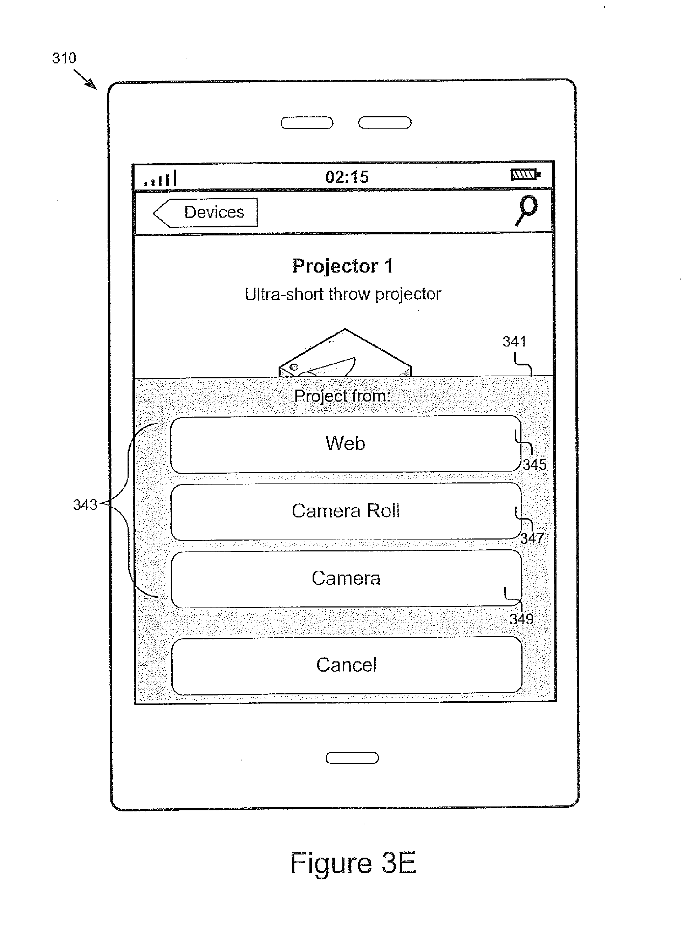

Figure 3D is a graphic representation of an embodiment of a user interface 308 for displaying a list of commands to send to a selected collaborative computing device 103 (e.g., projector) from a user device 102 such as a smartphone. Figure 3D could be the next screen that is displayed after selecting a location from the list 315 in Figure 3B. Figure 3D would not, however, be displayed if the user went from Figure 3A to Figure 3B because the user would have already selected the source material (attachment 303) to display on the collaborative computing device 103 in Figure 3A. The user interface 308 displays a thumbnail representation 327 of the selected device "Projector 1". In one embodiment, the user interface 308 displays the list 331 of commands that is reached responsive to the user clicking button 329 for "Projector 1" in Figure3B. The user can turn on the device "Projector 1' by clicking on the tab 333 for "Turn on', turn off the device "Projector 1" by clicking on the tab 335 for "Turn Off" and project an item on the device "Projector 1" by clicking on the tab 337 for "Project". Upon clicking on the tab 337 for "Project" the user is directed to another user interface for selecting a source of operation which is explained in further detail with reference to Figure 3E.

Figure 3E is a graphic representation of an embodiment of a user interface 310 for displaying a list of options to select a source of operation for a selected collaborative computing device 103 (e.g., projector) from a user device 102 such as a smartphone. The user interface 310 includes an overlay 341 over the display of the user device 102. The overlay 341 displays a list 343 of source of operations for the selected device "Projector 1". The user can project from the web onto the device 'Projector 1" by clicking on the tab 345 for "Web". The user can project from a memory associated with the user device 102 onto the device "Projector 1" by clicking on the tab 347 for "Camera Roll". The user can project from a camera associated with the user device 102 onto the device "Projector 1" by clicking on the tab 349 for "Camera".

### Methods

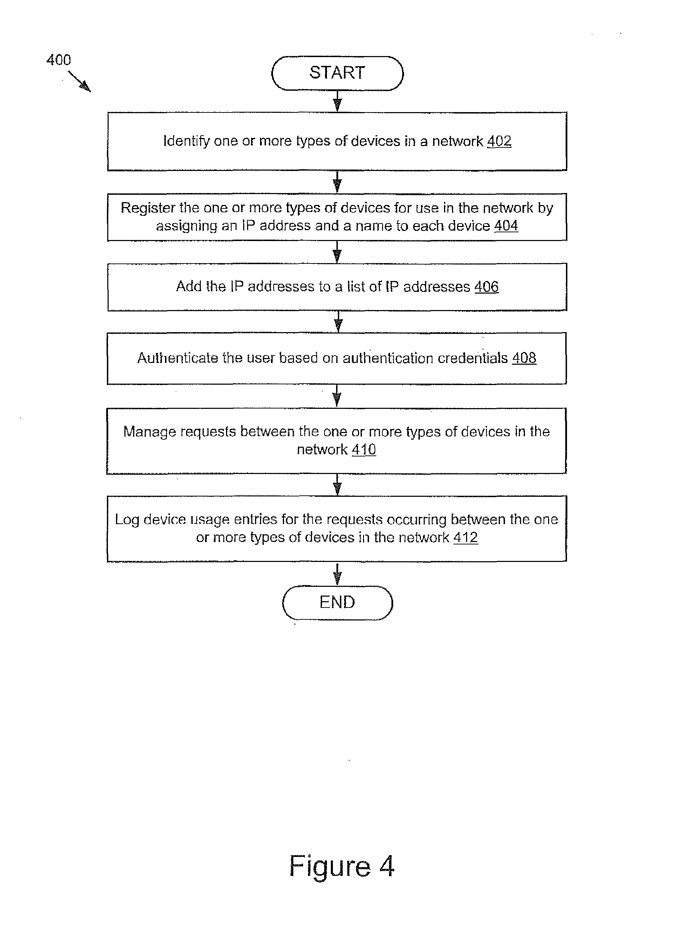

Referring now to Figures 4-6, various embodiments of the methods of the invention will be described. Figure 4 is a flow diagram 400 of an embodiment of a method for managing communication between one or more types of devices using an enterprise service bus 107 and NAaaS application services 106. The enterprise service bus 107 includes a workflow engine 201, a device management engine 203, a protocol adaptation engine 205, a message transformation engine 207 and a message enhancement engine 209. The NAaaS application services 106 include a user management service 211, a device management service 212, a device inventory service 265, a location service 299, a device usage analytics service 213, a media repository service 215, a media analysis service 217, a billing service 267 and a notification service 269.

The workflow engine 201 instructs the device management engine 203 to identify 402 one or more types of devices in a network. The device management service 212 instructs the device inventory service 265 to register 404 one or more types of devices for use in the network 404 by assigning an IP address and a name (e.g., a device identifier) to each device. For example, a user can register personal devices such as a tablet PC, a smartphone, etc. and the device inventory service 265 associates the devices with his username or another unique identifier. In another example, a user can register collaborative computing devices 103 such as a projector, an interactive whiteboard, etc. for use at a particular location or within certain limits of space such as a conference room or a floor of a building. The device inventory service 265 adds 406 the IP addresses to a list of IP addresses. For example, the device inventory service 265 stores a list of approved IP addresses in data storage 268.

In some embodiments, the workflow engine 201 instructs the user management service 211 to authenticate 408 each user based on authentication credentials. For example, the authentication credentials can be the registered user's login credentials. The protocol adaptation engine 205, the message transformation engine 207 and the message enhancement engine 209 manage 410 requests between the one or more types of devices in the network. For example, the message transformation engine 207 translates a first message in JSON format into a JMS format. The protocol adaptation engine 205 translates a HTTP protocol from a smartphone into a TCP protocol for a projector. The message enhancement engine 209 adds information (for e.g., additional authentication information, etc.) to the message for the target application to receive. The workflow engine 201 instructs the device usage analytics service 213 to log 412 device usage entries for the requests occurring between the one or more types of devices in the network 104.

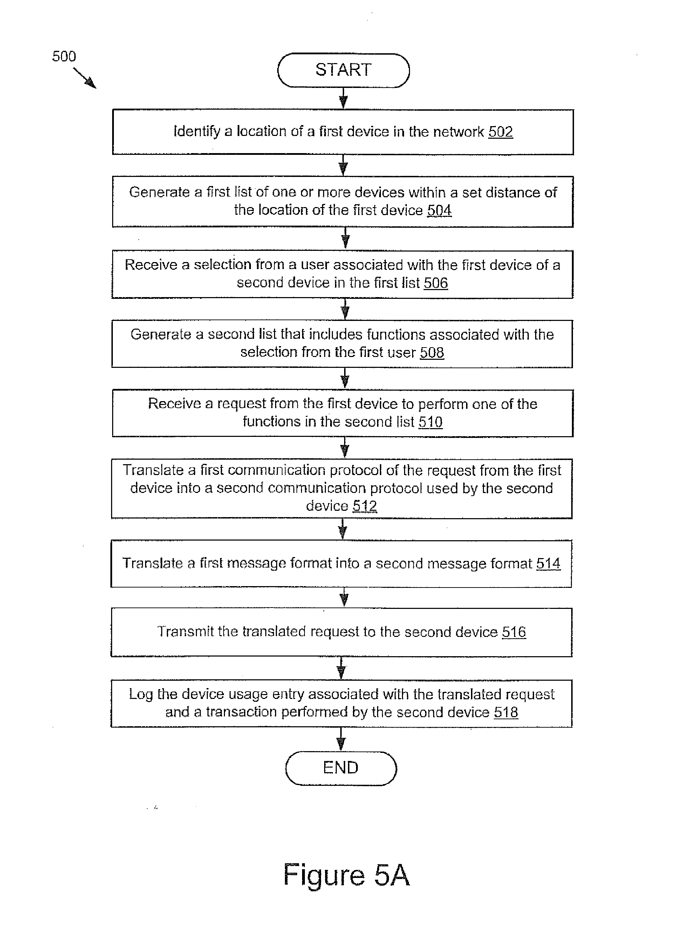

Figure 5A is a flow diagram 500 of an embodiment of a method for controlling interoperation between different types of devices by translating requests. The enterprise service bus 107 includes a workflow engine 201, a device management engine 203, a protocol adaptation engine 205, a message transformation engine 207 and a message enhancement engine209. The NAaaS application services 106 include a user management service 211, a device inventory service 265, a device management service 212, media repository service 215, a media analysis service 217, a billing engine 267, a notification service 269, a location service 299 and a device usage analytics service 213.

The device management engine 203 identifies 502 a location of a first device in the network and generates 504 a first list of one or more devices within a set distance of the location of the first device. For example, the user device 102 informs the device management engine 203 of its location and the device management engine 203 interacts with the device inventory service 265 and the location service 299 that are part of the NAaaS application services 106 to generate a list of collaborative computing devices 130 such as a projector, an interactive whiteboard and a web camera that are in a location within a threshold distance of the user device's 102 location. In another embodiment, the user device 102 specifies conference rooms where the user wants to control the devices and the device management engine 203 instructs the device inventory service 265 to generate a list of devices in those conference rooms. In another embodiment, the set distance is the reach of the network 104. Figure 3C is an example where the device management engine 203 provides the user with a list of the devices available in conference room 4C 313. The device management engine 203 provides the list to the user device 102.

The device management engine 203 receives 506 a selection from a user associated with the first device of a second device in the first list. The device management engine 203 generates 508 a second list that includes functions associated with the second device in the first list. Figure 3D is an example where the user selected a projector from the first list and the second list includes the functions associated with the projector.

The workflow engine 201 receives 510 a request from the first device to perform one of the functions in the second list. For example, the list of functions include power on, power off, projection, zoom, enhance, automatic focus, print, two-way video recording and transmission, two-way audio recording and transmission, language translation, text to speech translation and speech to text translation, etc. The protocol adaptation engine 205 translates 512 a first communication protocol of the request from the first device into a second communication protocol used by the second device. The message transformation engine 207 translates 514 a first message format into a second message format. The workflow engine 201 transmits 516 the translated request to the second device.

The workflow engine 201 instructs the device usage analytics service 213 to log 518 the device usage entry associated with the translated request and a transaction performed by the second device. For example, the device usage analytics service 213 logs a type of request sent (e.g., project, power on, power off, search, etc.), an IP address for the user device 102 that made the request (e.g., smartphone, laptop, etc.), a user identifier for the user associated with the user device 102, an IP address for the collaborative computing device 103 that receives the request (e.g. projector, laptop, conferencing device, etc.), a type of functionality used (e.g., auto-focus, enhance, imaging, etc.) and a type of media that is being exchanged between the one or more devices (e.g., a presentation program document, a text document, a spreadsheet document, a video recording, an audio recording, an image, etc.).

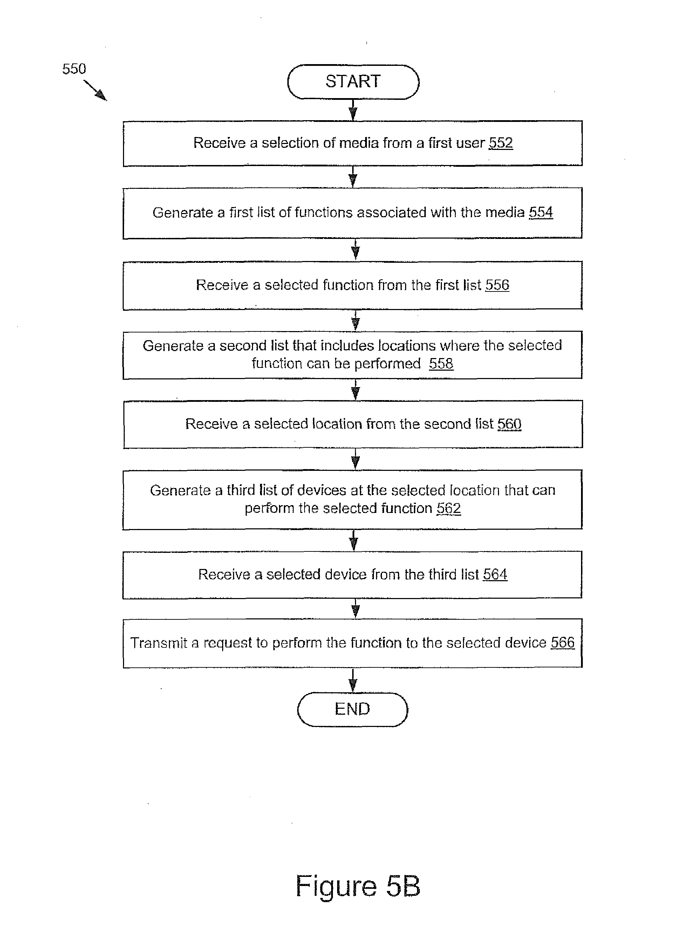

Figure 5B is a flow diagram 550 of another embodiment of a method for controlling interoperation between different types of devices by translating requests. The enterprise service bus 107 includes a workflow engine 201 and a device management engine 203. The NAaaS application services 106 include a user management service 211, a device inventory service 265, a location service 299 and device management service 212.

The workflow engine 201 receives 552 a selection of media from a first user. For example, the user selects an email attachment. The device management engine 203 generates 554 a first list of functions associated with the media. For example, the user could project the email. The workflow engine 201 transmits the first list to the user. The workflow engine 201 receives 556 a selected function from the first list. The device management engine 203 instructs the location service 299 to determine the user's location. The device management engine 203 then instructs the location inventory service 299 to generate 558 a second list that includes locations where the selected function could be performed. For example, the location service 299 generates a list of locations within a threshold distance from the user or the user also provides additional input about a location where the user wants to select a device. The workflow engine 201 transmits the second list to the user. In some embodiments, instead of a list of locations where the selected function can be performed, the second list includes devices within a certain location that can perform the selected function. For example, the device management engine 203 interacts with the device inventory service 265 and the location service 299 to generate a list of collaborative computing devices 130 within the location.

The workflow engine 201 receives 560 a selected location from the second list. The device management engine 203 instructs the device inventory service 265 and device management service 212 to generate 562 a third list of devices at the selected location that can perform the selected function. For example, the third list includes devices that are available. The workflow engine 201 transmits the third list to the user. The workflow engine 201 receives 564 a selected device from the third list. The workflow engine 201 transmits 566 a request to perform the function to the selected device. For example, the workflow engine 201 transmits a request to project the email attachment to a projector in a conference room.

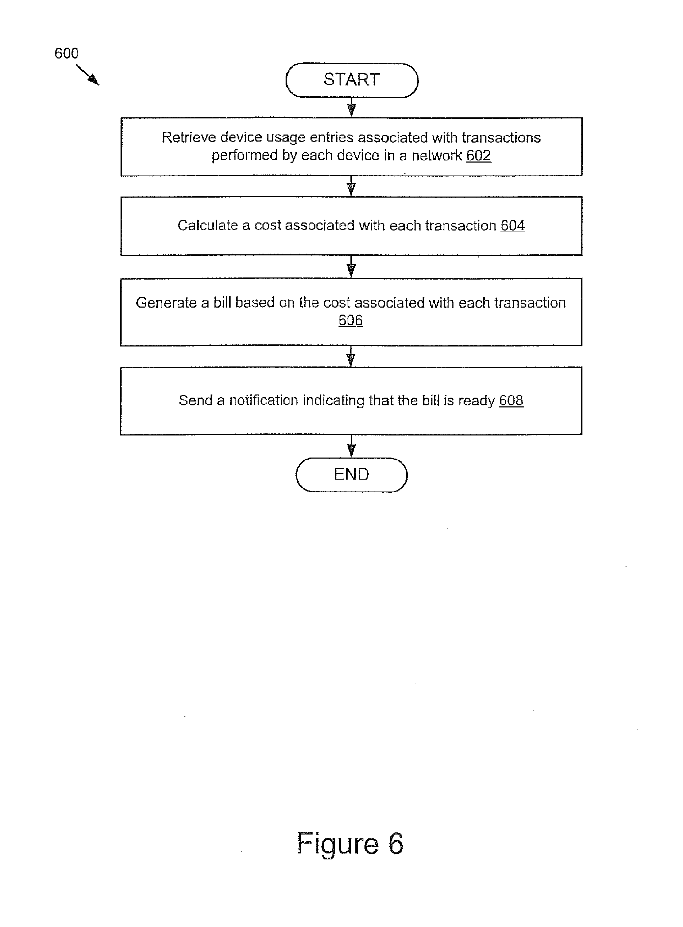

Figure 6 is a flow diagram 600 of an embodiment of a method for generating a bill based on a cost determined for each transaction performed by a device. The workflow engine 201 instructs the device usage analytics service 213 to retrieve 602 device usage entries associated with transactions performed by each device in a network 104 from data storage 268. For example, the device usage analytics service 213 retrieves device usage entries for all transactions requested by a user device 102 in the past month. The workflow engine 201 sends the retrieved data to the billing service 267. The billing service 267 calculates 604 a cost associated with each transaction and generates 606 a bill based on the cost associated with each transaction. For example, the billing service 267 determines the cost of using Magnetic Resonance Imaging (MRI) device to image the spine of a patient is 2000 dollars. The notification service 269 sends 608 a notification indicating the bill is ready. The workflow engine 201 receives the notification and sends the notification to the device or an email account of a user associated with the device.

The foregoing description of the embodiments has been presented for the purposes of illustration and description. It is not intended to be exhaustive or to limit the specification to the precise form disclosed. Many modifications and variations are possible in light of the above teaching. It is intended that the scope of the embodiments be limited not by this detailed description, but rather by the claims of this application. As will be understood by those familiar with the art, the examples may be embodied in other specific forms without departing from the spirit or essential characteristics thereof. Likewise, the particular naming and division of the modules, routines, features, attributes, methodologies and other aspects are not mandatory or significant, and the mechanisms that implement the description or its features may have different names, divisions and/or formats. Furthermore, as will be apparent to one of ordinary skill in the relevant art, the modules, routines, features, attributes, methodologies and other aspects of the specification can be implemented as software, hardware, firmware or any combination of the three. Also, wherever a component, an example of which is a module, of the specification is implemented as software, the component can be implemented as a standalone program, as part of a larger program, as a plurality of separate programs, as a statically or dynamically linked library, as a kernel loadable module, as a device driver, and/or in every and any other way known now or in the future to those of ordinary skill in the art of computer programming. Additionally, the specification is in no way limited to implementation in any specific programming language, or for any specific operating system or environment. Accordingly, the disclosure is intended to be illustrative, but not limiting, of the scope of the specification, which is set forth in the following claims.

The present application is based on and claims the benefit of priority of US Application No. 13/689, 758 filed on November 29, 2012.

## Claims

1. A computer-implemented method comprising:
identifying, using one or more computing devices, a first list of one or more devices;
receiving, using the one or more computing devices, a selection from a user associated with a first device of a second device in the first list;
generating, using the one or more computing devices, a second list that includes functions associated with the selection from the user;
receiving, using the one or more computing devices, a request from the first device to perform one of the functions in the second list;
translating, using the one or more computing devices, a first communication protocol of the request received from the first device into a second communication protocol used by the second device to create a translated request;
translating, using the one or more computing devices, a first message format of the request into a second message format; and
transmitting, using the one or more computing devices, the translated request to the second device.

2. The method of claim 1, wherein identifying the first list of the one or more devices comprises:
identifying a location of the first device in a network; and
identifying the first list of one or more devices within a set distance of the location of the first device.

3. The method of claim 1, further comprising:
logging a device usage entry associated with the translated request that includes a type of request, an internet protocol address for the first device, a user identifier for the user associated with the first device, a unique device identifier for the second device and a type of media that is included in the translated request.

4. The method of claim 1, further comprising:
retrieving device usage entries associated with at least one transaction performed by the second device;
determining a cost associated with the at least one transaction;
and
generating a bill based on the cost associated with each transaction.

5. The method of claim 1, further comprising storing media associated with the translated request, the media including at least one of a presentation document, a text document, a spreadsheet document, a video recording, an audio recording and an image.

6. The method of claim 1, further comprising:
determining which of the devices in the first list of one or more devices are idle for a set amount of time; and
generating a notification indicating which of the devices in the first list of one or more devices are idle for the first device.

7. The method of claim 1, wherein the first communication protocol is a Hypertext Transfer Protocol (HTTP) and the second communication protocols is a Transmission Control Protocol (TCP).

8. The method of claim 1, wherein the second list of functions comprise at least one from a group of power on, power off, projection, zoom, enhance, automatic focus, print, two-way video transmission, two-way audio transmission, language translation, text to speech translation and speech to text translation.

9. The method of claim 1, wherein identifying the first list of one or more devices includes identifying at least one of an Internet Protocol (IP) address, a Media Access Control (MAC) address and Geolocation of the one or more devices.

10. The method of claim 1, further comprising:
registering the first device for use in the network by assigning an internet protocol (IP) address and a name to the first device and adding the IP address to a list; and
registering the second device for use in the network by assigning a device identifier and a name to the second device and adding the device identifier to a list.

11. A system (100) comprising:
one or more processors (240); and
an enterprise service bus (107) stored on a memory (245) and executable by the one or more processors, the enterprise service bus configured to generate a first list of one or more devices, receive a selection from a user associated with a first device of a second device in the first list, generate a second list that includes functions associated with the selection from the user, receive a request from the first device to perform one of the functions in the second list, translate a first communication protocol of the request received from the first device into a second communication protocol used by the second device to create a translated request, translate a first message format of the request into a second message format and transmit the translated request to the second device.

12. The system of claim 11, further comprising:
application services executable by the one or more processors, the application services configured to identify a location of the first device in a network and providing the enterprise service bus with the first list of one or more devices within a set distance of the location of the first device.

13. The system of claim 11, further comprising:
application services executable by the one or more processors, the application services configured to log a device usage entry associated with the translated request that includes a type of request, an internet protocol address for the first device, a user identifier for a user associated with the first device, a unique device identifier for the second device and a type of media that is included in the translated request.

14. The system of claim 11, further comprising:
application services executable by the one or more processors, the application services configured to retrieve device usage entries associated with at least one transaction performed by the second device, determine a cost associated with the at least one transaction and generate a bill based on the cost associated with each transaction.

15. A computer program product comprising a computer usable medium including a computer readable program, **characterized in that** the computer readable program when executed on a computer causes the computer to:
generate a first list of one or more devices;
receive a selection from a user associated with a first device of a second device in the first list;
generate a second list that includes functions associated with the selection from the user;
receive a request from the first device to perform one of the functions in the second list;
translate a first communication protocol of the request received from the first device into a second communication protocol used by the second device to create a translated request;
translate a first message format of the request into a second message format; and
transmit the translated request to the second device.
